# EUROPÄISCHE PATENTANMELDUNG

(11) **EP 0 787 998 A2**
(43) Veröffentlichungstag der Anmeldung: **06.08.1997**
(21) Anmeldenummer: 97101557.3
(22) Anmeldetag: 31.01.1997
(51) Int. Cl.: G01S 13/56

(54) **Mikrowellensensorsystem für die Überwachung von Räumen**

(30) Priorität: 02.02.1996 DE 19603667
(71) Anmelder: f+g megamos Sicherheitselektronik GmbH, 51674 Wiehl (DE)
(72) Erfinder: Ghosh, Sharmila,, 55122 Mainz (DE); Gruchalski, Gerd, 57223 Krueztal (DE)
(74) Vertreter: Cohausz & Florack

(57) **Zusammenfassung**

Die Erfindung betrifft ein Mikrowellensensorsystem für die Überwachung von Räumen, insbesondere Innenräumen von Fahrzeugen, mit einem Sender zum Abstrahlen von Mikrowellen-Sendeimpulsen, einem Empfänger für den Empfang der im überwachten Raumbereich reflektierten Strahlung und einer Auswerteeinrichtung, welche eine Abtasteinrichtung enthält, mittels der aus dem empfangenen Signal zu vorgebbaren Zeiten Abtastwerte gewonnen werden. Um die Empfindlichkeit des Systems zu verbessern, ist vorgesehen, daß der Auswerteeinrichtung ein Verzögerungsglied mit variierbarer Verzögerungszeit für den Abtastzeitpunkt des empfangenen Signals sowie Mittel zur Erzeugung eines Meßwerteprofils aus den ermittelten Abtastwerten zugeordnet sind, wobei das Meßwerteprofil der Entfernung des Objektes zum Empfänger entsprechende Amplitudenwerte repräsentiert und zwar zwischen einem vorgebbaren Mindestwert und einem vorgebbaren Höchstwert des Abstandes zum Empfänger.

## Beschreibung

Die Erfindung betrifft ein Mikrowellensensorsystem für die Überwachung von Räumen, insbesondere Innenräumen von Fahrzeugen, mit einem Sender zum Abstrahlen von Mikrowellen-Sendeimpulsen, einem Empfänger für den Empfang der im überwachten Raumbereich reflektierten Strahlung und einer Auswerteeinrichtung, welche eine Abtasteinrichtung enthält, mittels der aus dem empfangenen Signal zu vorgebbaren Zeiten Abtastwerte gewonnen werden.

Bekannte Systeme, die bevorzugt zur Innenüberwachung von Kraftfahrzeugen in Form von Alarmanlagen eingesetzt werden basieren entweder auf mechanischen Kontakten, insbesondere Türkontakten, oder auf der Basis von aktiven oder passiven Infrarot- oder Ultraschallsensoren.

Die wesentlichen Kriterien, die für Alarmanlagen im Kfz-Bereich eine Rolle spielen, sind zum einen ein möglichst geringer Stromverbrauch, da das System aus der Fahrzeugbatterie gespeist wird, und zum anderen eine hohe Sicherheit in der Erkennung eines alarmbedingenden Ereignisses. Andererseits ist eine möglichst große Sicherheit gegen einen Fehlalarm erforderlich sowie eine hohe Störfestigkeit gegen Umgebungseinflüsse.

Aus der Praxis sind zur Innenraumüberwachung von Kraftfahrzeugen auch auf Mikrowellenstrahlung (Radar) basierende Systeme bekannt, die im wesentlichen auf Grundlage des Dopplereffektes arbeiten. Die Alarmgabe erfolgt unter Ausnutzung des Dopplereffektes im Falle einer einen bestimmten Betrag überschreitenden bewegungsbedingten Signaländerung. Auswertekriterium ist dabei der vom Empfänger ermittelte Signalpegel. Nachteilig ist, daß unter Umständen nicht unterschieden werden kann, zwischen einem nahen, kleinen Objekt (z.B. der Hand eines Diebes) und einem entfernten, ein hohes Reflektionssignal liefernden Objekt, z.B. dem metallenen Aufbau eines vorbeifahrenden LKW's, falls beide Objekte denselben Signalpegel liefern. Ein generelles Problem bei Mikrowellensystemen besteht darin, daß die Mikrowellenstrahlung die Fahrzeugfenster durchdringt und somit auch außerhalb des Fahrzeugs erfolgende Bewegungsänderungen, beispielsweise durch vorbeigehende Passanten, zu einer ungewünschten Alarmgabe führen können. Zur Vermeidung dieser Fehlerquelle ist es bekannt, die Empfindlichkeit des Sensors so weit herabzusetzen, daß keine Reaktion auf den Außenraum erfolgt. Im Falle eines Einbruchversuchs im Randbereich des Fahrzeugs kann aber hierdurch bedingt keine zuverlässige Alarmgabe mehr erfolgen.

Ein Mikrowellensensorsystem der eingangs genannten Art ist bekannt aus dem US-Patent 5 361 070. Ein solches System basiert auf dem Puls-Echo-Verfahren. Das bekannte System ist darauf ausgelegt, daß es innerhalb des zu überwachenden Raumes eine Bewegung feststellt. Hierzu wird eine vorgegebene Zeitdauer nach der Aussendung des Sendepulses ein Abtastgitter geöffnet und der Abtastwert abgespeichert. Der erhaltene Abtastwert wird über eine Vielzahl von wiederholten Pulsen gemittelt und Änderungen gegenüber dem gemittelten Abtastwert deuten auf eine Änderung in der Mikrowellenreflektivität hin, so daß hierdurch eine Bewegung erkannt wird.

Demgegenüber liegt der Erfindung die Aufgabe zugrunde, ein Mikrowellensystem der eingangs genannten Art hinsichtlich seiner Genauigkeit zu verbessern.

Diese Aufgabe wird erfindungsgemäß dadurch gelöst, daß der Auswerteeinrichtung ein Verzögerungsglied mit variierbarer Verzögerungszeit für den Abtastzeitpunkt des empfangenen Signals sowie Mittel zur Erzeugung eines Meßwerteprofils aus den ermittelten Abtastwerten zugeordnet sind, wobei das Meßwerteprofil der Entfernung des Objektes zum Empfänger entsprechende Amplitudenwerte repräsentiert und zwar zwischen einem vorgebbaren Mindestwert und einem vorgebbaren Höchstwert des Abstandes zum Empfänger.

Die Erfindung zeichnet sich dadurch aus, daß im Unterschied zu der bekannten Lösung, bei der das empfangene Signal zu einem feststehenden Abtastzeitpunkt abgetastet wird, das Abtastfenster bei Wiederholung des Sendeimpulses variiert wird. Durch die auf diese Weise erfolgende kontinuierliche oder quasi kontinuierliche Variation der Verzögerungszeit des Abtasters im Empfänger ergibt sich ein Meßwerteprofil in Form von bestimmten Entfernungen zugeordneten Amplitudenwerten, welches repräsentativ ist für Objekte, die sich zwischen einem vorgebbaren Minimalabstand zum Empfänger und einem vorgebbaren Maximalabstand zum Empfänger befinden. Diese Meßmethode ermöglicht daher also auch, stillstehende Objekte zu erfassen. Mit dem erfindungsgemäßen System wird also nicht, wie bei den bekannten Systemen, der Signalpegel gemessen sondern die tatsächliche Entfernung eines Objektes vom Empfänger, so daß im Ergebnis ein genaues Abbild der näheren Umgebung erhalten werden kann.

Bevorzugte Ausführungsformen sind in den Unteransprüchen gekennzeichnet. Eine besondere Ausführungsform besteht zum Beispiel darin, daß mehrere Sender und Empfänger verwendet werden, deren Ausgangssignale von einer gemeinsamen Auswerteeinheit erfaßt werden. Die mehreren Sender und Empfänger können so räumlich einander zugeordnet sein, daß eine genaue Positionsbestimmung eines bestimmten Objektes in einer vorgebenen Ebene ermöglicht wird.

Ein weiterer bevorzugter Gestaltungsaspekt sieht vor, daß der Auswerteeinrichtung ein Schwellwertgeber zugeordnet ist derart, daß bei Überschreitung einer vorgebbaren Schwelle ein Alarmkriterium gebildet wird.

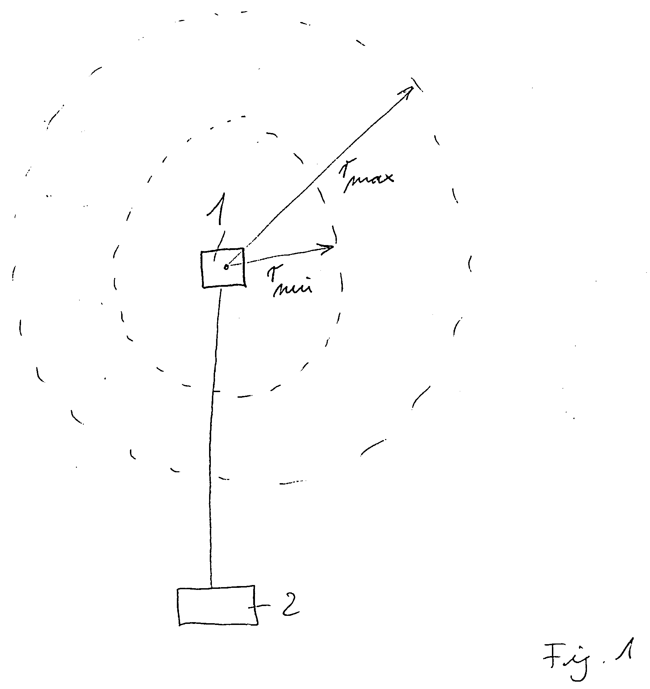

Die Erfindung wird im folgenden anhand eines Ausführungsbeispieles näher erläutert. Hierzu zeigen
- Fig. 1: eine Skizze zur räumlichen Anordnung eines Mikrowellensensorsystems.
- Fig. 2: eine Skizze zur Darstellung der Funktion des erfindungsgemäßen Mikrowellensystems gemäß Ausführungsbeispiel.

Innerhalb eines zu überwachenden Raumes, beispielsweise dem Innenraum eines Kraftfahrzeuges, ist ein Mikrowellensensor 1 angeordnet, welcher sowohl einen Sender zum Aussenden von impulsförmiger Mikrowellenstrahlung aufweist als auch einen Empfänger zum Empfang der im Überwachungsraum von einem Objekt reflektierten Mikrowellenstrahlung.

Der Ausgang des Empfängers des Mikrowellensensors 1 ist mit einer Auswerteeinrichtung 2 verbunden. Die Auswerteeinrichtung 2 enthält eine Abtasteinrichtung sowie ein der Abtasteinrichtung vorgeordnetes Verzögerungsglied einstellbarer Zeitdauer.

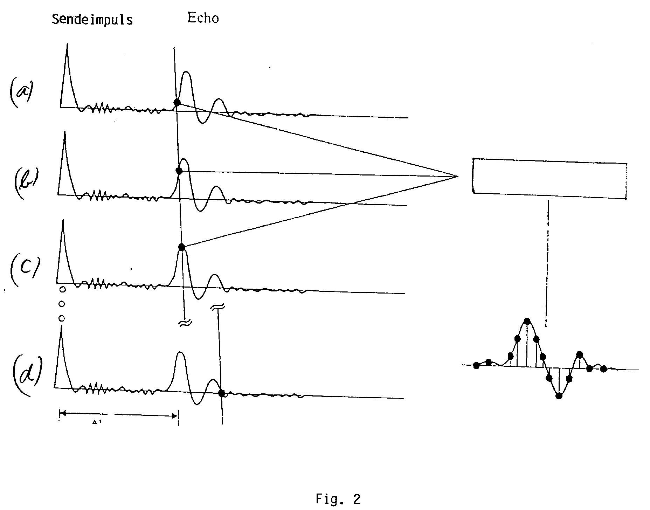

Die Funktion dieser Sensoreinrichtung wird anhand von Fig. 2 erläutert. Zunächst ist im linken Teil der Darstellungen in Fig. 2 jeweils der Sendeimpuls dargestellt, welcher mit einer Impulsbreite von weniger als 350 ps vom Sender abgestrahlt wird. Das vom in einem Überwachungsraum angeordneten Objekt reflektierte Mikrowellensignal trifft auf den Empfänger und äußert sich beispielsweise in dem in Fig. 2 als "Echo" dargestellten Kurvenverlauf. In der Auswerteeinrichtung 2 wird nun zu einer bestimmten Abtastzeit △t nach dem Aussenden des Sendeimpulses ein Abtastwert ermittelt (Fig. 2(a)). Dieser Abtastwert wird abgespeichert. Anschließend erfolgt eine Wiederholung des Sendeimpulses, wobei die Abtastzeit, wie in Fig. 2(b) dargestellt ist, um einen bestimmten Betrag vergrößert wird. Entsprechend erfolgt die Abtastung um diese Zeit später. Gleiches wiederholt sich für eine beliebig vorgebbare Anzahl von Sendeimpulsen. Nach Aufnahme des gesamten Echos wird das in Fig. 2 unten rechts dargestellte Meßwertprofil aufgenommen, welches sämtliche zu den unterschiedlichen Abtastzeitpunkten ermittelten Amplitudenwerte enthält. Wegen der Konstanz der Lichtgeschwindigkeit spiegelt der Zeitverlauf dieser Kurve genau die Entfernungen zu den einzelnen Punkten des Objektes wieder. Auf diese Weise kann ein räumliches Profil der gesamten Umgebung des Mikrowellensensors zwischen einem frei vorgebbaren Minimalradius rₘᵢₙ und einem frei vorgebbaren Maximalradius rₘₐₓ aufgenommen werden. Zum Einlesen des Signalverlaufes in einen Mikrocontroller per A/D-Wandler müssen die einzelnen Abtastwerte in einem Sample/Hold-Glied gepuffert werden. Zur Vereinfachung der Schaltung kann stattdessen auch der Sendeimpuls mehrfach wiederholt und das Empfangssignal durch einen Tiefpaß geglättet werden, so daß die Einhüllende der Impulsfolge gewandelt wird.

Gegenüber bekannten Systemen, bei dem als Alarmkriterium ein fester Grenzwert des Empfängerpegels vorgegeben wird, lassen sich bei dem System der vorliegenden Erfindung wesentlich komplexere Alarmkriterien vorgeben.

Darüber hinaus kann ein automatischer Abgleich des Sensors über den Mikroprozessor erfolgen und der Prozessor kann seine allgemeinen Filteralgorithmen adaptiv an die jeweiligen Umgebungsbedingungen anpassen und in dem Signal typische Einbruchsmuster bzw. vor allem Nicht-Einbruchs- und durch Störung hervorgerufene Muster erkennen und entsprechend behandeln.

Die Positionierung des Sensors im unteren Teil des Fahrzeugs ist sinnvoll, beispielsweise in der Mittelkonsole, in dem Armaturenbrett oder den Sitzen, da das zu überwachende Gebiet im Innenraum des Fahrzeuges näherungsweise kugelförmig ist. Auch ist eine Positionierung im Bereich des Dachs, der Innenbeleuchtung oder den Seitenholmen möglich, jedoch weniger an die Form des Fahrzeugs angepaßt. Da Mikrowellenstrahlung im Unterschied zu Infrarot bzw. Ultraschall die meisten nicht metallischen Materialien durchdringt, ist auch ein verdeckter Einbau möglich. Hierdurch wird zum einen der Sensor vor Verschmutzung und Beschädigung geschützt und zum anderen ergibt sich die Möglichkeit, daß das Design des Fahrzeuginnenraumes durch den Sensor nicht beeinträchtigt wird.

Weitere Merkmale des Systems sind wie folgt gegeben:

Eine Verringerung des Stromverbrauchs ergibt sich durch die Ansteuerung des Impulsgenerators mit möglichst großem Puls-/Pausenverhältnis, da ohnehin nur eine Flanke genutzt wird. Dies kann durch einen analogen Differenzierer, im einfachsten Fall ein CR-Glied, erreicht werden oder alternativ dazu auf digitalem Wege durch eine Verzögerung per Gatterlaufzeit. Auch durch die Verringerung der Impulsfrequenz oder den diskontinuierlichen Betrieb des Sensors, in dem über eine bestimmte Zeit x gemessen wird und anschließend über eine bestimmte Zeit y eine Pause erfolgt, läßt sich der Stromverbrauch verringern.

Ein weiterer Vorteil ergibt sich dadurch, daß die Verzögerungszeit des Empfänger-/Abtastimpulses kontinuierlich bzw. quasi kontinuierlich bei entsprechend kleiner Abstufung einstellbar gemacht wird. Dadurch kann sich das System automatisch an die Gegebenheiten im Kfz-Innenraum anpassen und Bauteiletoleranzen, Temperaturdrift, Alterung und ähnliche Erscheinungen ausgleichen. Das Einlesen des vollständigen Kurvenverlaufs entsprechend der Methode des "Random Interleaved Sampling" (RIS) ist möglich.

Eine weitere Verbesserung ist dadurch gegeben, daß Störimpulse aus dem Empfängerteil, die beispielsweise durch Funktelefone, Radio, Fernsehstationen oder CB-Funk verursacht werden, entweder antennenseitig im HF-Teil oder niederfrequenzseitig im IF-Teil oder ausgangsseitig, z.B. digital durch den Mikroprozessor herausgefiltert werden.

Schließlich läßt sich das Einschwingverhalten der Filter, welche eine sehr lange Zeitkonstante von 1 bis 10 Hz aufweisen, durch kontinuierlichen Betrieb des NF-Teils, durch schnellere RIS-Abtastung oder durch ein veränderters Filterdesign, z.B. eine Gyratorschaltung, verbessern.

Neben der oben beschriebenen Alarmfunktion kann das Mikrowellensystem nach Ausführungsbeispiel auch in alternativen Verwendungsweisen betrieben werden:

Beispielsweise kann ausgenutzt werden, daß die Fahrzeugscheiben mikrowellendurchlässig sind, so daß auch Personen außerhalb des Fahrzeuges erkannt werden. Dieser Effekt kann zu einer Verlängerung der Vorwarnzeit der Alarmanlage genutzt werden und damit zu einer Verlängerung der Mikrowellenimpulszyklen dienen. Zwischen zwei Zyklen kann die Anlage abschalten und somit der Stromverbrauch weiter reduziert werden.

Eine wichtige Funktion besteht auch darin, daß die Auswerteeinrichtung des Mikrowellensystems mit Komfortfunktionen des Fahrzeuges gekoppelt sein kann, beispielsweise mit der Zentralverriegelung oder des Kofferraumes bei Keyless-Car-Systemen.

Ein Einsatz des erfindungsgemäßen Systems ist auch zur Regenerkennung auf Scheiben zur Scheibenwischermotoransteuerung möglich.

Eine weitere Verwendungsweise besteht darin, eine Personenerkennung innerhalb des Kfz durchzuführen, d.h. eine Sitzplatzbelegung festzustellen und somit beispielsweise eine Anschnallwarnung auszusprechen oder aber eine Airbagsperre auszulösen, falls ein Kindersitz auf der Beifahrerseite montiert ist.

Bei entsprechender Positionierung des Sensors kann der erfindungsgemäße Mikrowellensensor auch als Einparkhilfe bzw. zur Überwachung des toten Winkels dienen.

## Patentansprüche

1. Mikrowellensensorsystem für die Überwachung von Räumen, insbesondere Innenräumen von Fahrzeugen, mit einem Sender zum Abstrahlen von Mikrowellen-Sendeimpulsen, einem Empfänger für den Empfang der im überwachten Raumbereich reflektierten Strahlung und einer Auswerteeinrichtung, welche eine Abtasteinrichtung enthält, mittels der aus dem empfangenen Signal zu vorgebbaren Zeiten Abtastwerte gewonnen werden,
**dadurch gekennzeichnet**, daß der Auswerteeinrichtung ein Verzögerungsglied mit variierbarer Verzögerungszeit für den Abtastzeitpunkt des empfangenen Signals sowie Mittel zur Erzeugung eines Meßwerteprofils aus den ermittelten Abtastwerten zugeordnet sind, wobei das Meßwerteprofil der Entfernung des Objektes zum Empfänger entsprechende Amplitudenwerte repräsentiert und zwar zwischen einem vorgebbaren Mindestwert und einem vorgebbaren Höchstwert des Abstandes zum Empfänger.

2. Mikrowellensensorsystem nach Anspruch 1,
**dadurch gekennzeichnet**, daß die Verzögerungszeit für die jeweiligen Abtastzeitpunkte kontinuierlich variierbar ist.

3. Mikrowellensensorsystem nach Anspruch 1 oder 2,
**dadurch gekennzeichnet**, daß mehrere Sender bzw. Empfänger vorgesehen sind, deren Signale von einer gemeinsamen Auswerteeinrichtung verarbeitet werden.

4. Mikrowellensensorsystem nach Anspruch 3,
**dadurch gekennzeichnet**, daß die mehreren Sender bzw. mehreren Empfänger in fester räumlicher Zordnung zueinander angeordnet sind derart, daß eine genaue zweidimensionale Positionsbestimmung des zu überwachenden Objektes ermöglicht wird.

5. Mikrowellensensorsystem nach einem der vorhergehenden Ansprüche,
**dadurch gekennzeichnet**, daß der Auswerteeinrichtung ein Schwellwertgeber zugeordnet ist, mittels dem bei Überschreitung einer vorgebbaren Schwelle im Meßwertprofil ein Alarmkriterium gebildet wird.

6. Mikrowellensensorsystem nach dem der vorhergehenden Ansprüche,
**dadurch gekennzeichnet**, daß Sender und Empfänger jeweils zu einer Mikrowellensensoreinheit zusammengefaßt ist.

7. Mikrowellensensorsystem nach Anspruch 6,
**dadurch gekennzeichnet**, daß der Mikrowellensensor im Bereich der Mittelkonsole oder des Armaturenbrettes des Fahrzeuges positioniert ist.

8. Mikrowellensensorsystem nach Anspruch 6,
**dadurch gekennzeichnet**, daß der Mikrowellensensor im Fahrzeugdach oder im Bereich der Innenbeleuchtung positioniert ist.

9. Mikrowellensensorsystem nach Anspruch 6,
**dadurch gekennzeichnet**, daß der Mikrowellensensor im Bereich der Seitenholme des Fahrzeugs positioniert ist.

10. Mikrowellensensorsystem nach einem der vorhergehenden Ansprüche,
**dadurch gekennzeichnet**, daß der Einbau des Mikrowellensensors verdeckt erfolgt.

11. Verwendung eines Mikrowellensensorsystems nach einem der vorhergehenden Ansprüche für die Innenraumüberwachung von Kraftfahrzeugen.

12. Verwendung eines Mikrowellensensorsystems nach einem der vorhergehenden Ansprüche für die Innenraumüberwachung von antriebslosen Fahrzeugen, insbesondere Wohnwagen oder Anhängern.

13. Verwendung eines Mikrowellensensorsystems nach einem der vorhergehenden Ansprüche zur Sitzplatzbelegungskennung in Fahrzeugen.

14. Verwendung eines Mikrowellensensorsystems nach einem der vorhergehenden Ansprüche zur Außenraumüberwachung eines Kraftfahrzeuges.
